# EUROPÄISCHE PATENTSCHRIFT

(11) **EP 1 729 348 B1**
(45) Veröffentlichungstag und Bekanntmachung des Hinweises auf die Patenterteilung: **06.10.2010**
(21) Anmeldenummer: 06010045.0
(22) Anmeldetag: 16.05.2006
(51) Int. Cl.: H01L 31/048

(54) **Elektrische Anschluss- und Verbindungsdose für ein Solarzellenmodul**
Junction box for a solar cell modul
Boîte de jonction pour un module de cellule solaire

(30) Priorität: 03.06.2005 DE 102005025976
(43) Veröffentlichungstag der Anmeldung: 06.12.2006
(73) Patentinhaber: Günther Spelsberg GmbH & Co. KG, 58579 Schalksmühle (DE)
(72) Erfinder: Nieleck, Udo, 58791 Werdohl (DE); Quardt, Dirk, 58638 Iserlohn (DE); Schmidt, Wieland, 58553 Halver (DE); Spelsberg, Holger, 58579 Schalksmühle (DE); Wasserfuhr, Friedel, 51688 Wipperfürth (DE); Zborowski, Zbigniew, 58509 Lüdenscheid (DE)
(74) Vertreter: Michalski Hüttermann & Partner Patentanwälte

(56) Entgegenhaltungen:
- EP-A- 1 501 133
- EP-A- 1 501 157
- WO-A-00/30216
- JP-A- 2002 359 389

## Beschreibung

Die Erfindung betrifft eine elektrische Anschluß- und Verbindungsdose für ein Solarzellenmodul aus mit dünnen Leiterbändem angeschlossenen Solarzellen, mit einem Gehäuse und in dem Gehäuse vorgesehenen elektrischen oder/und elektronischen Einrichtungen sowie wenigstens einer in dem Gehäuse vorgesehenen und wenigstens eine Klemmeinrichtung aufweisenden elektrischen Anschlußvorrichtung.

Da die Ausgangsspannung einzelner Solarzellen im allgemeinen zu gering ist, um elektrische Geräte, wie Haushaltsgeräte oder ähnliche Geräte, zu betreiben, werden im allgemeinen mehrere Solarzellen zu Solarzellenmodulen zusammengeschaltet. Dabei besteht einerseits die Möglichkeit der Reihenschaltung der Solarzellen und andererseits die Möglichkeit der Parallelschaltung der Solarzellen im Solarzellenmodul. Durch ein Parallelschalten der Solarzellen addieren sich die einzelnen Ströme der Solarzellen zu einem Gesarntstrom. Dabei sollten die parallelgeschalteten Solarzellen allerdings im wesentlichen die gleichen physikalischen Eigenschaften haben, so daß sich in der Praxis das Parallelschalten von Solarzellen kaum durchgesetzt hat, insbesondere auch da eine einzelne Solarzelle bereits einen Strom von einigen Ampere liefern kann.

Bei der Zusammenstellung von Solarzellenmodulen mit einzelnen Solarzellen werden die Solarzellen daher häufig in Reihe geschaltet. Ein Problem kann sich dabei jedoch dann ergeben, wenn ein Solarzellenmodul partiell abgeschattet wird, also eine Solarzelle oder einzelne Solarzellen des Solarzellenmoduls weniger oder gar keine Sonnenbestrahlung erhalten. Der Grund für eine verringerte Sonnenbestrahlung kann z. B. in einer Verschmutzung der Solarzellen oder in Schattenwürfen von Bäumen, Gebäudeeinrichtungen oder Gebäuden liegen.

Im Gegensatz zu einer Abschattung des Solarmoduls gleichmäßig über seine gesamte Fläche, die nur zu einer Leistungsverringerung insgesamt führt, ergibt sich bei einer partiellen Abschattung folgendes Problem: Durch die in Reihe geschalteten Solarzellen des Solarzellenmoduls fließt ein gemeinsamer Strom, wobei jede einzelne Solarzelle mit ihrer jeweiligen Spannung zur Gesamtspannung des Solarzellenmoduls beiträgt. Wird nun eine Solarzelle abgeschattet, so erzeugt diese keine Spannung mehr und setzt dem Stromfluß im Solarzellenmodul praktisch eine Diode in Sperrichtung entgegen. Dies bedeutet jedoch, daß das gesamte Modul keinen Strom mehr liefern kann, so daß die gesamte Funktion des Solarzellenmoduls beeinträchtigt ist.

Außerdem gilt, daß an der abgeschatteten Solarzelle eine Spannung anliegt, die abhängig ist von der Position der abgeschatteten Solarzelle in der Reihenschaltung. Ist diese an der abgeschatteten Solarzelle anliegende Spannung größer als ihre Sperrspannung, so wird es in der Solarzelle zu einem Durchschlag und damit zu einer dauerhaften Beschädigung der Solarzelle kommen. Selbst wenn es zu keiner Beschädigung der Solarzelle durch einen Durchschlag kommen sollte, wird in der abgeschatteten Solarzelle eine große Verlustleistung umgesetzt, so daß sich die abgeschattete Solarzelle aufheizt. Auch eine solche Aufheizung kann zu Beschädigungen an der abgeschatteten Solarzelle sowie an den ihr benachbarten Solarzellen führen.

Um die mit teilweise abgeschatteten Solarzellen verbundene Problematik zu vermeiden, werden häufig Dioden, sogenannte Bypass-Dioden, verwendet, die antiparallel zu den Solarzellen geschaltet werden. Auf diese Weise wird erreicht, daß eine abgeschattete Solarzelle zwar keinen Anteil mehr zur Gesamtspannung des Solarzellenmoduls leistet, der Stromfluß jedoch trotzdem erhalten bleibt. Das Solarzellenmodul zeigt somit lediglich eine verminderte Betriebspannung, fällt jedoch nicht vollständig aus. Außerdem wird in der abgeschatteten Solarzelle keine Leistung mehr umgesetzt, so daß eine Beschädigung der abgeschatteten Solarzelle vermieden werden kann.

Grundsätzlich könnte jeder Solarzelle eines Solarzellenmoduls genau eine Diode zugeordnet sein. Häufig wird jedoch so vorgegangen, daß eine Mehrzahl hintereinander geschalteter Solarzellen jeweils durch eine gemeinsame Diode abgesichert wird. Elektrische Anschluß- und Verbindungsdosen, die für Solarzellenmodule verwendet werden, weisen somit im allgemeinen immer eine Mehrzahl von Bypass-Dioden auf Darüber hinaus können in den elektrischen Anschluß- und Verbindungsdosen weitere elektrische oder/und elektronische Einrichtungen vorgesehen sein, so daß der elektrischen Anschluß- und Verbindungsdose zugeführte Leiter mit den elektrischen oder/und elektronischen Einrichtungen, wie den Bypass-Dioden, verbunden werden müssen.

Die Solarzellen in einem Solarzellenmodul sind im allgemeinen mit dünnen Leiterbändern, sogenannten Strings, miteinander verbunden. Diese Leiterbänder weisen typischerweise eine Dicke von wenigen Zehntel Millimeters (ca. 0,3 mm) und eine Breite von einigen Millimetern (ca. 3-8 mm) auf. Diese die einzelnen Solarzellen des Solarzellenmoduls miteinander verbindenden Leiterbänder werden aus dem Solarzellenmodul heraus geführt, so daß die dünnen Leiterbänder direkt zu Anschlußzwecken verwendet werden können.

Die Bypass-Dioden sind in der Regel auf einer Leiterplatte angeordnet, die mit einer Anschlußvorrichtung der Anschluß- und Verbindungsdose verbunden ist. Die Anschlußvorrichtung ist über wenigstens ein Leiterband mit dem Solarzellenmodul verbunden.

Zum Anschluß werden die Leiterbänder typischerweise in die elektrische Anschluß- und Verbindungsdose von unten her eingeführt, die einen abnehmbaren Deckel aufweist, so daß die einzelnen Leiterbänder von Hand mit der in dem Gehäuse der Anschluß- und Verbindungsdose vorgesehenen elektrischen Anschlußvorrichtung kontaktiert werden können. Dazu werden die vom Solarzellenmodul, relativ zum Gehäuse der Anschluß- und Verbindungsdose von unten her kommenden dünnen Leiterbänder im allgemeinen um 180° umgebogen, um dann von oben her kommend beispielsweise über eine Klemmeinrichtung an die Anschlußvorrichtung angeschlossen zu werden. Ein solches Umbiegen ist ohne weiteres möglich, da die dünnen Leiterbänder, die typischerweise aus Metall bestehen, aufgrund ihrer Abmessungen, insbesondere nämlich ihrer geringen Dicke, sehr flexibel sind. Allerdings ist diese Vorgehensweise sehr aufwendig und zeitintensiv, und Anschlußfehler können nicht ohne weiteres vermieden werden. Darüber hinaus ist bei den bekannten Anschluß- und Verbindungsdosen von Nachteil, daß aufgrund der begrenzten äußeren Abmessungen des Gehäuses in der Regel im Inneren der Anschluß- und Verbindungsdose die elektrischen und/oder elektronischen Einrichtungen und die Anschlußvorrichtung sehr nah beieinander angeordnet werden müssen. Dadurch steht für den Anschluß der Leiterbänder ein nur sehr geringer Freiraum zur Verfügung, was den Anschluß erschwert.

EP 1 501 157 A2 beschreibt eine Anschlussdose mit Haltevorrichtungen zum Halten von jeweils einem Kontaktelement, welches jeweils ein Flächenstück mit zwei Federarme aufweist, die parallel zum Flächenstück gerade aufeinander zulaufen und unter einem spitzen Winkel einen Kontaktbereich bilden. Der Kontaktbereich ist zum Kontaktieren eines Festkontakts eines Solarpanels geeignet und weist hiefür einen Frontbereich und einen Unterbereich auf. Im Frontbereich laufen die Federarme gerade auseinander. Das Einführen eines Festkontakts eines Solarpanels ist sowohl vom Frontbereich als auch vom Unterbereich möglich.

EP 1 501 133 A1 beschreibt eine Anschlussdose mit einem Gehäuse. Auf dem Gehäuse-Boden im Inneren des Gehäuses sind Stromschienen mit jeweils einem Kontaktelement angeordnet, wobei jedes der Kontaktelemente ein Kontaktgehäuse zum Durchführen von elektrischen Leitungen eines Solarpanels aufweist.

Es ist daher die Aufgabe der Erfindung, eine solche elektrische Anschluß- und Verbindungsdose für ein Solarzellenmodul anzugeben, mit der ein einfacher und sicherer Anschluß aus dem Solarzellenmodul herausgeführter dünner Leiterbänder ermöglicht wird.

Ausgehend von der eingangs beschriebenen elektrischen Anschluß- und Verbindungsdose ist die zuvor hergeleitete und aufgezeigte Aufgabe bei einer ersten alternativen Ausführungsform der Erfindung dadurch gelöst, daß die Klemmeinrichtung zur Herstellung eines Klemmkontaktes zwischen der Anschlußvorrichtung und einem Leiterband derart ausgebildet und angeordnet ist, daß wenigstens ein aus dem Solarzellenmodul herausgeführtes dünnes Leiterband in zwei unterschiedlichen gegenüberliegenden Einführrichtungen in die Klemmeinrichtung einführbar ist, wobei die Klemmeinrichtung Ωförmig ausgebildet ist mit zwei über einen im Bodenbereich der Klemmeinrichtung angeordneten Bodenabschnitt verbundenen Klemmschenkeln, die in Richtung auf einen Klemmabschnitt der Klemmeinrichtung aufeinander zulaufen und endseitig in auseinanderlaufende Einführschrägen übergehen, so dass die Klemmeinrichtung im Klemmabschnitt einen im wesentlichen X-förmigen Querschnitt aufweist.

Die Erfindung geht also einen völlig neuen Weg, indem aus dem Solarzellenmodul herausgeführte und zum Anschluß der Solarzellen dienende dünne Leiterbänder erfindungsgemäß in zwei unterschiedlichen vorzugsweise gegenüberliegenden Einführrichtungen in die Klemmeinrichtung einführbar und damit an die elektrische Anschlußvorrichtung anschließbar sind. Durch die Erfindung ist es möglich, einerseits die zum Anschluß der Solarzellen dienenden dünnen Leiterbänder von unten her und andererseits von oben her in die Klemmeinrichtung einzuführen. Durch die Erfindung wird damit das aufwendige, aus dem Stand der Technik bekannte Vorgehen vermieden, die dünnen Leiterbänder zum Anschließen der Solarzellen in der Anschluß- und Verbindungsdose erst nach oben zu führen und dann um bis zu 180° umzubiegen, um sie der Anschlußvorrichtung zuzuführen. Beim Anschließen der Solarzellen des Solarzellenmoduls ist der erforderliche Aufwand also durch die Erfindung erheblich verringert. Dabei ist es erfindungsgemäß vorgesehen, daß bedarfsweise ein Leiterband von der einen oder von der anderen Seite der Klemmeinrichtung in die Klemmeinrichtung einführbar ist. Je nach der vorgegebenen Anordnung der Anschlußvorrichtung in dem Gehäuse kann es dabei vorgesehen sein, das Leiterband in der einen Einführrichtung oder in der anderen Einführrichtung in die Klemmeinrichtung einzuführen. Dadurch ergibt sich eine weitaus größere Flexibilität bei der Anordnung der Anschlußvorrichtung in einer erfindungsgemäßen Anschluß- und Verbindungsdose für ein Solarzellenmodul, Durch die erfindungsgemäße Anschluß- und Verbindungsdose wird darüber hinaus der Anschluß von aus dem Solarzellenmodul herausgeführten dünnen Leiterbänden weiter vereinfacht, da die erfindungsgemäße Anschluß-und Verbindungsdose von zwei Anschlußseiten her auf das Solarzellenmodul aufgesetzt werden kann, um die Leiterbänder von unten her in die elektrische Anschlußvorrichtung einzuführen.

Die Ω-förmige Ausbildung der Klemmeinrichtung trägt dazu bei, daß es in einfacher Weise möglich ist, ein Leiterband und/oder einen Anschlußleiter eines elektronischen Bauteils von oben her über die Einführschrägen in den Klemmabschnitt einzuführen. Darüber hinaus lassen sich Ω-förmige Klemm einrichtungen in einfacher Weise herstellen und ermöglichen die sichere elektrische Kontaktierung der in den Klemmabschnitt eingeführten Leiter.

Die vorgenannte Aufgabe wird bei einer alternativen Ausführungsform der eingangs beschriebenen elektrischen Anschluß- und Verbindungsdose dadurch gelöst, daß die Klemmeinrichtung derart ausgebildet und angeordnet ist, daß sowohl ein Klemmkontakt mit wenigstens einem Leiterband als auch ein Klemmkontakt mit wenigstens einem vorzugsweise kreisförmigen Anschlußleiter eines elektronischen Bauteils, insbesondere einem Anschlußleiter einer Bypass-Diode, durch Einführen des Leiterbandes bzw. des Anschlußleiters in die Klemmeinrichtung herstellbar ist. Der Erfindung liegt an dieser Stelle der Grundgedanke zugrunde, eine Klemmeinrichtung sowohl für den Anschluß des Leiterbandes als auch für den Anschluß eines elektronischen Bauteils, wie beispielsweise einer Bypass-Diode, auszubilden. Dabei ist die Klemmeinrichtung Ω-förmig mit zwei über einen im Bodenbereich der Klemmeinrichtung angeordneten Bodenabschnitt verbundenen Klemmschenkeln ausgebildet, die in Richtung auf einen Klemmabschnitt der Klemmeinrichtung aufeinander zulaufen und endseitig in auseinanderlaufende Einführschrägen übergehen, so dass die Klemmeinrichtung im Klemmabschnitt einen im wesentlichen X-förmigen Querschnitt aufweist.

Beispielsweise kann eine Mehrzahl von elektrischen Anschlußvorrichtungen in der Anschluß- und Verbindungsdose vorgesehen sein, die vorzugsweise nebeneinander angeordnet werden können. In diesem Fall ist es möglich, den ersten Anschlußleiter eines elektronischen Bauteils, vorzugsweise einer Bypass-Diode, in die Klemmeinrichtung einer ersten Anschlußvorrichtung und den zweiten Anschlußleiter des Bauteils in die Klemmeinrichtung einer benachbarten zweiten Anschlußvorrichtung einzuführen. In diesem Fall ist es nicht länger notwendig, beispielsweise die Bypass-Dioden auf einer Leiterplatte anzuordnen, wie dies üblicherweise bei den aus dem Stand der Technik bekannten Anschluß- und Verbindungsdosen vorgesehen ist. Dies trägt dazu bei, daß der im Inneren der Dose für den Anschluß der Leiterbänder zur Verfügung stehende Freiraum vergrößert wird, was den Anschluß erleichtert. Darüber hinaus ist von Vorteil, daß die bei der erfindungsgemäßen Anschluß-und Verbindungsdose vorgesehenen Klemmeinrichtungen bedarfsweise mit einem Leiterband und/oder mit einem Anschlußleiter eines elektronischen Bauteils verbunden werden können, was zu einem einfachen Aufbau der erfindungsgemäßen Anschluß- und Verbindungsdose und zu einer hohen Flexibilität bei der Anordnung der Anschlußvorrichtung in der erfindungsgemäßen Anschluß-und Verbindungsdose führt.

Um ein Leiterband sowohl von oben her über die Einführschrägen als auch von unten her in den Klemmabschnitt der Klemmeinrichtung einführen zu können, kann es erfindungsgemäß vorgesehen sein, daß wenigstens ein bodenseitiger Einführabschnitt für ein Leiterband vorgesehen ist und daß im Bereich des Einführabschnittes die Klemmschenkel unverbunden sind. Vorzugsweise weist der Bodenabschnitt eine Ausnehmung auf, die zum Einführen eines Leiterbandes ausgebildet sein kann. Beispielsweise ist es möglich, daß sich der bodenseitige Einführabschnitt in Längsrichtung des Klemmabschnittes ausgehend von den Längsseiten der Klemmschenkel in Richtung zum mittleren Bereich der Klemmschenkel erstreckt. Grundsätzlich ist es natürlich auch möglich, daß der bodenseitige Einführabschnitt als schlitzförmige Ausnehmung des Bodenabschnitts ausgebildet ist. Bedarfsweise kann auch vorgesehen sein, daß der Bodenabschnitt mehrere in Längsrichtung nebeneinander liegende Einführabschnitte aufweist, die das Einführen eines Leiterbandes in die Klemmeinrichtung durch den Bodenabschnitt hindurch ermöglichen.

Um einen sicheren elektrischen Kontakt zwischen einem vorzugsweise kreisförmigen Anschlußleiter eines elektronischen Bauteils und der Klemmeinrichtung zu ermöglichen, kann erfindungsgemäß vorgesehen sein, daß der Klemmschenkel einer Klemmeinrichtung im Klemmabschnitt wenigstens einen nach außen gewölbten vorzugsweise schalenförmigen weiteren Einführabschnitt für den Anschlußleiter aufweist und daß, weiter vorzugsweise, der weitere Einführabschnitt des einen Klemmschenkels und der weitere Einführabschnitt des anderen Klemmschenkels gegenüberliegend angeordnet sind. Im letztgenannten Fall ergänzen sich die beiden gegenüberliegenden Einführabschnitte zu einer im wesentlichen nußförmigen Öffnung des Klemmabschnittes. Wird ein kreisförmiger Anschlußleiter in diesen Einführabschnitt eingeführt, wird durch die größere Kontaktfläche zwischen dem Anschlußleiter und dem Klemmschenkel eine sichere elektrische Kontaktierung gewährleistet.

Die Anschlußvorrichtung kann einen Strombalken aufweisen, auf den vorzugsweise zwei Klemmeinrichtungen derart aufgeklemmt sein können, daß über den Strombalken ein Leitungskontakt zwischen wenigstens einem in die erste Klemmeinrichtung eingeführten Leiterband und wenigstens einem in die zweite Klemmeinrichtung eingeführten Anschlußleiter, vorzugsweise einem Anschlußleiter einer Bypass-Diode, herstellbar ist. Nach dem Aufklemmen der Klemmeinrichtung auf den Strombalken verläuft der Strombalken zwischen dem Klemmabschnitt und wird zwischen zwei Klemmschenkeln eingeklemmt. Um ein Leiterband und/oder einen Anschlußleiter eines elektronischen Bauteils über die Klemmeinrichtung mit dem Strombalken zu verbinden, muß daß Leiterband und/oder der Anschlußleiter in den zwischen dem Strombalken und einem der Klemmschenkel gebildeten Klemmbereich eingeführt werden. Das Leiterband bzw. der Anschlußleiter werden somit zwischen dem Strombalken und einem Klemmschenkel der Klemmeinrichtung eingeklemmt.

Der Strombalken kann stegförmig mit vorzugsweise im wesentlichen rechtwinklig zueinander angeordneten Stegendabschnitten ausgebildet sein. Vorzugsweise ist an beiden Stegendabschnitten jeweils eine Klemmeinrichtung vorgesehen, wobei weiter vorzugsweise in einem Anschlußzustand ein Leiterband an die eine Klemmeinrichtung und ein Anschlußleiter an die andere Klemmeinrichtung angeschlossen ist. Bei einer besonders bevorzugten Ausführungsform ist es vorgesehen, daß der Strombalken im wesentlichen U-förmig ausgebildet ist und einen geraden und einen abgewinkelten Leiterschenkel aufweist. An einem freien Ende des Leiterschenkels, vorzugsweise des abgewinkelten Leiterschenkels, kann eine Anschlußklemme vorgesehen sein zum Anschluß der Anschlußvorrichtung an einen Leitungskontakt, der aus der Anschluß- und Verbindungsdose herausführt. Vorzugsweise kann es sich bei der Anschlußklemme um eine Zugfederklemme handeln. Grundsätzlich können jedoch auch andere Formen von Anschlußklemmen eingesetzt werden. Wenngleich die zuvor beschriebene Ausbildung des Strombalkens einen besonders einfachen Einbau der Anschlußvorrichtung in das Gehäuse der Anschluß- und Verbindungsdose und einen vergleichsweise großen zum Anschluß der Leiterbänder zur Verfügung stehenden Freiraum sicherstellt, ist es grundsätzlich natürlich auch vorgesehen, den Strombalken in Abhängigkeit von der konstruktiven Ausgestaltung der Anschluß- und Verbindungsdose bzw. der Anordnung der in dem Gehäuse vorgesehenen elektrischen und/oder elektronischen Einrichtungen bedarfsweise an die tatsächlichen Platzverhältnisse anzupassen.

Die Klemmschenkel und/oder der Bodenabschnitt können aus einem Federmaterial hergestellt sein. Dies erleichtert die Herstellung und führt zu geringen Herstellungskosten. Grundsätzlich ist es aber auch möglich, daß die Klemmschenkel federbeaufschlagt sind, um eine ausreichende Klemmkraft im Bereich des Klemmabschnittes zur Verfügung zu stellen.

Im einzelnen gibt es eine Vielzahl von Möglichkeiten, die erfindungsgemäße elektrische Anschluß- und Verbindungsdose auszugestalten und weiterzubilden, wobei einerseits auf die abhängigen Patentansprüche und andererseits auf die nachfolgende detaillierte Beschreibung eines bevorzugten Ausführungsbeispiels der Erfindung unter Bezugnahme auf die Zeichnung verwiesen wird. In der Zeichnung zeigt
- Fig. 1: eine perspektivische Darstellung einer Anschlußvorrichtung mit zwei Klemmeinrichtungen zur Verwendung in einer erfindungsgemäßen Anschluß- und Verbindungsdose für ein Solarzellenmodul, wobei ein Leiterband von oben in eine Klemmeinrichtung der Anschlußvorrichtung eingeführt wird,
- Fig. 2: die in Fig. 1 dargestellte Anschlußvorrichtung, wobei das Leiterband von unten in die Klemmeinrichtung eingeführt wird,
- Fig. 3: eine Klemmeinrichtung der in den Fig. 1 und Fig. 2 dargestellten Anschlußvorrichtung in einer schematischen Ansicht von der Seite,
- Fig. 4: die in Fig. 3 dargestellte Klemmeinrichtung in einer schematischen Ansicht von oben,
- Fig. 5: einen eine Anschlußklemme aufweisenden Strombalken der in den Fig. 1 und Fig. 2 dargestellten Anschlußvorrichtung in einer schematischen Ansicht von oben und
- Fig. 6: den in Fig. 5 dargestellten Strombalken mit zwei auf den Strombalken aufgeklemmten Klemmeinrichtungen der in den Fig. 3 und Fig. 4 dargestellten Art.

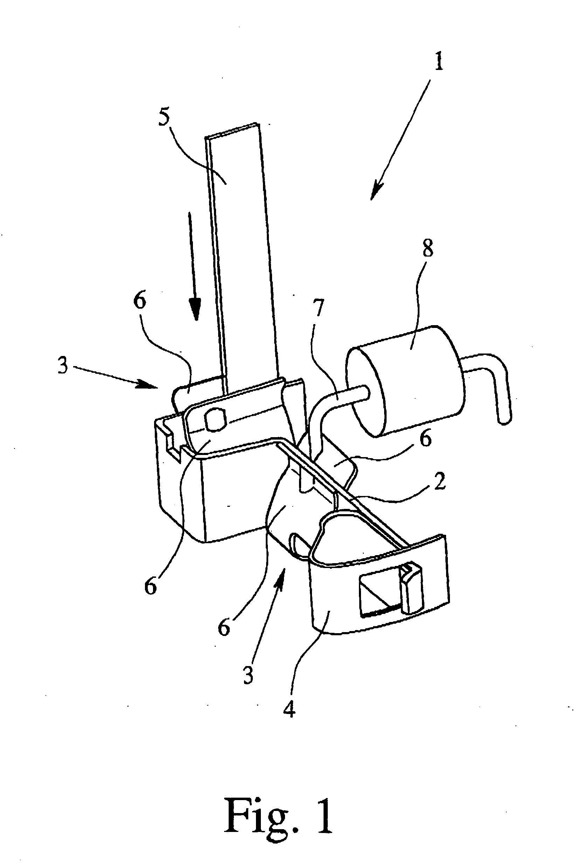

In Fig. 1 ist eine bevorzugte Ausführungsform einer Anschlußvorrichtung 1 dargestellt, die zum Anschluß einer nicht im einzelnen dargestellten erfindungsgemäßen Anschluß- und Verbindungsdose an ein Solarzellenmodul eingesetzt werden kann. Die Anschlußvorrichtung 1 weist einen Strombalken 2 und zwei Klemmeinrichtungen 3 auf, die auf den Strombalken 2 aufgeklemmt sind. Grundsätzlich können auch mehr als zwei Klemineinrichtungen 3 auf den Strombalken 2 aufgeklemmt sein. Darüber hinaus weist der Strombalken 2 an einem freien Ende eine Anschlußklemme 4 auf, im vorliegenden Fall eine Zugfederklemme. Im Einbauzustand ist die Anschlußvorrichtung 1 innerhalb der elektrischen Anschluß- und Verbindungsdose angeordnet und mit dem Solarzellenmodul über dünne Leiterbänder 5 verbunden.

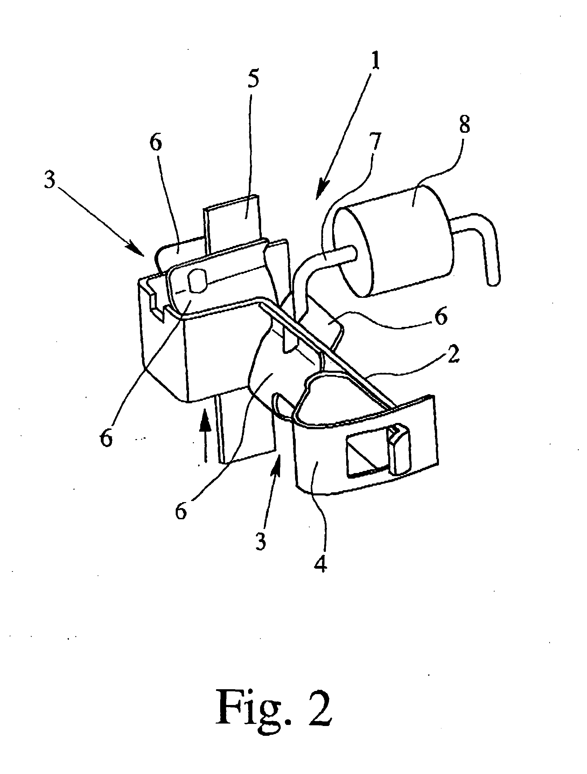

Um einen einfachen und sicheren Anschluß der aus dem Solarzellenmodul herausgeführten dünnen Leiterbänder 5 zu ermöglichen, ist es erfindungsgemäß vorgesehen, daß die Klemmeinrichtung 3 zur Herstellung eines Klemmkontaktes derart ausgebildet und angeordnet ist, daß wenigstens ein aus dem Solarzellenmodul herausgeführtes dünnes Leiterband 5 in wenigstens zwei unterschiedlichen gegenüberliegenden Einführrichtungen in die Klemmeinrichtung 3 einführbar ist. Dies wird bei einem Vergleich der Fig. 1 und 2 deutlich, wobei gemäß Fig. 1 das Leiterband 5 von oben her in die Klemmeinrichtung 3 und gemäß Fig. 2 von unten her in die Klemmeinrichtung 3 eingeführt wird. Nach dem Einführen des Leiterbandes 5 in die Klemmeinrichtung 3 ist das Leiterband 5 zwischen einem Klemmschenkel 6 der Klemmeinrichtung 3 und dem Strombalken 2 eingeklemmt.

Darüber hinaus ist aus den Fig. 1 und Fig. 2 zu entnehmen, daß die Klemmeinrichtung 3 derart ausgebildet und angeordnet ist, daß sowohl ein Klemmkontakt mit wenigstens einem Leiterband 5 als auch ein Klemmkontakt mit wenigstens einem vorzugsweise kreisförmigen Anschlußleiter 7 eines elektronischen Bauteils durch Einführen des Leiterbandes 5 bzw. des Anschlußleiters 7 in die Klemmeinrichtung 3 herstellbar ist. Gemäß den in Fig. 1 und Fig. 2 dargestellten Ausführungsformen ist ein kreisförmiger Anschlußleiter 7 einer Bypass-Diode 8 in eine weitere Klemmeinrichtung 3 eingeführt, die an den Strombalken 2 angeklemmt ist. Die weitere Klemmeinrichtung 3 ist bei der in den Fig. 1 und Fig. 2 dargestellten Ausführungsformen an einem freien Ende eines abgewinkelten Leiterschenkels des vorliegend U-förmig ausgebildeten Strombalkens 2 angeklemmt. Um das Aufschieben der Klemmeinrichtungen 3 auf den Strombalken 2 zu erleichtern, ist der Strombalken 2 stegförmig ausgebildet. Wenngleich es grundsätzlich auch möglich wäre, daß die Anschlußvorrichtung 1 lediglich eine Klemmeinrichtung 3 zum Anschluß an ein Leiterband 5 und an eine Bypass-Diode 8 aufweist, ist es vorzugsweise vorgesehen, für jedes Leiterband 5 und für jede Diode 8 jeweils eine Klemmeinrichtung 3 vorzusehen. Dies erleichtert das Anschließen des Leiterbandes 5 an die Anschlußvorrichtung 1.

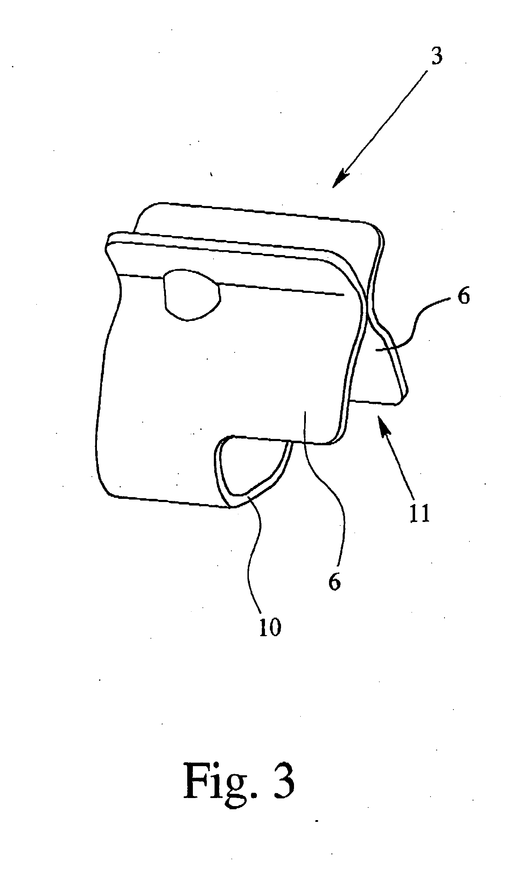

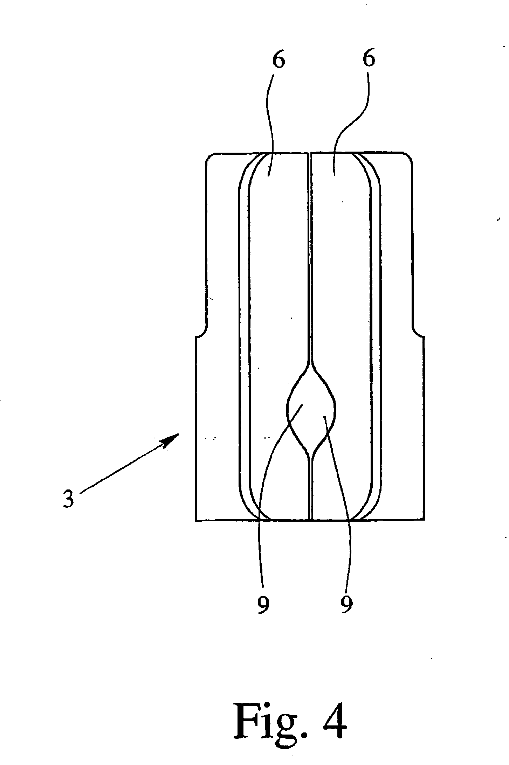

Beim Einführen des Anschlußleiters 7 der Bypass-Diode 8 in die Klemmeinrichtung 3 wird der Anschlußleiter 7 zwischen einem Klemmschenkel 6 der Klemmeinrichtung 3 und dem Strombalken 2 geführt bzw. eingeklemmt. Wie sich insbesondere aus den Fig. 3 und Fig. 4 ergibt, weist die Klemmeinrichtung 3 zwei zusammenwirkende Klemmschenkel 6 auf, wobei jeder Klemmschenkel 6 im Klemmabschnitt wenigstens einen nach außen gewölbten vorzugsweise schalenförmigen weiteren Einführabschnitt 9 für den Anschlußleiter 7 aufweist und wobei gemäß der dargestellten Ausführungsform der weitere Einführabschnitt 9 des einen Klemmschenkels 6 und der weitere Einführabschnitt 9 des anderen Klemmschenkels 6 gegenüberliegend angeordnet sein können. Durch die schalenförmige Auswölbung des weiteren Einführabschnitts 9 wird gewährleistet, daß es zu einem sicheren Klemmkontakt zwischen dem Anschlußleiter 7 und dem Strombalken 2 nach dem Einführen des Anschlußleiters 7 in den Einführabschnitt 9 kommt.

In Fig. 3 ist eine der in den Fig. 1 und Fig. 2 zum Anschluß an das Leiterband 5 bzw. an den Anschlußleiter 7 vorgesehenen Klemmeinrichtungen 3 in einer schematischen Ansicht von der Seite dargestellt. Die Klemmeinrichtung 3 ist Ω-förmig ausgebildet und weist zwei über einen im Bodenbereich der Klemmeinrichtung 3 angeordneten Bodenabschnitt 10 verbundene Klemmschenkel 6 auf, die in Richtung auf einen Klemmabschnitt der Klemmeinrichtung 3 aufeinander zulaufen und endseitig in auseinanderlaufende Einführschrägen übergehen, so daß die Klemmeinrichtung 3 im Klemmabschnitt einen im wesentlichen X-förmigen Querschnitt aufweist. Durch die Einführschrägen am Ende der Klemmschenkel 6 wird das Einführen des Leiterbandes 5 und/oder des Anschlußleiters 7 erleichtert. Bei der in Fig. 3 dargestellten Ausführungsform einer Klemmeinrichtung 3 sind die Klemmschenkel 6 nur bereichsweise über den Bodenabschnitt 10 miteinander verbunden. Ausgehend von den Längsseiten der Klemmschenkel 6 in Richtung zum mittleren Bereich der Klemmschenkel 6 erstreckt sich ein bodenseitiger Einführabschnitt 11, über den es möglich ist, ein Leiterband 5 auch von unten her in Richtung zum Klemmspalt in die Klemmeinrichtung 3 einzuführen. Vorzugsweise sind die Klemmschenkel 6 und/oder der Bodenabschnitt 10 aus einem Federmaterial hergestellt, um die zum Aufklemmen der Klemmeinrichtung 3 auf den Strombalken 2 und die zum Einklemmen des Leiterbandes 5 und/oder des Anschlußleiters 7 notwendige Klemmkraft aufzubringen.

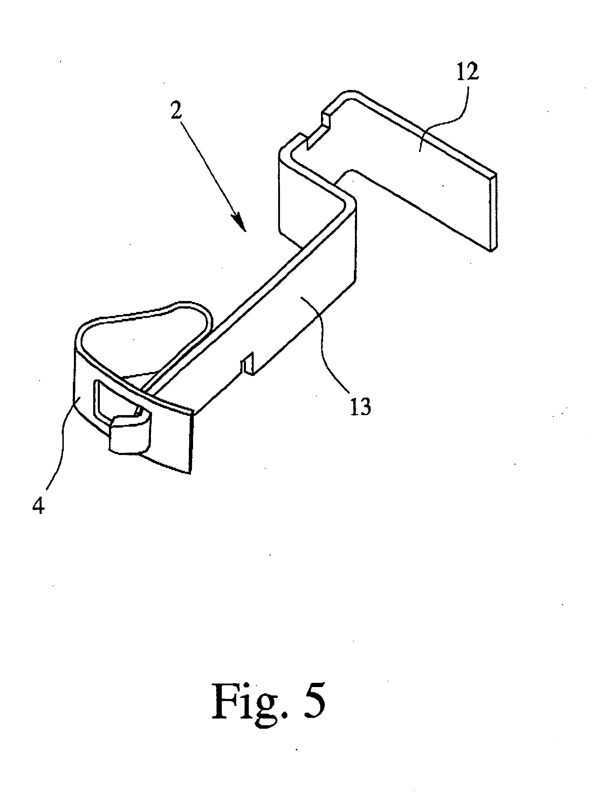

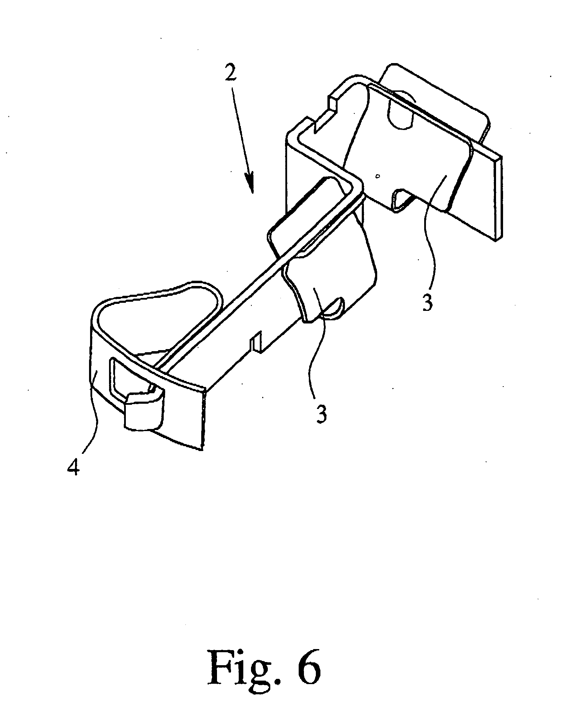

Die Fig. 5 zeigt den in den Fig. 1 und Fig. 2 dargestellten Strombalken 2 der Anschlußvorrichtung 1. Der Strombalken 2 ist im wesentlichen U-förmig ausgebildet und weist einen geraden Leiterschenkel 12 und einen abgewinkelten Leiterschenkel 13 auf, Der Strombalken 2 ist stegförmig ausgebildet, wobei an einem freien Ende des abgewinkelten Leiterschenkels 13 die Anschlußklemme 4 vorgesehen ist. In Fig. 6 ist der in Fig. 5 dargestellte Strombalken 2 erneut dargestellt, wobei zwei Klemmeinrichtungen 3 auf den Strombalken 2 aufgeklemmt sind.

Wie der obigen Beschreibung der elektrischen Anschluß- und Verbindungsdose gemäß dem bevorzugten Ausführungsbeispiel entnehmbar ist, geht die Erfindung einen völlig neuen Weg, indem die flexiblen dünnen Leiterbänder 5 sowohl von oben als auch von unten her in das Gehäuse der elektrischen Anschluß- und Verbindungsdose eingeführt bzw. ausgehend von zwei Seiten mit der Anschlußvorrichtung 1 verbunden werden können. Darüber hinaus wird durch die bei der erfindungsgemäßen Anschluß- und Verbindungsdose vorgesehene Ausbildung der Anschlußvorrichtung 1 ein platzsparender Einbau der Anschlußvorrichtung 1 in die Dose ermöglicht. Im übrigen können die Bypass-Dioden 8 in einfacher Weise mit dem Strombalken 2 über eine Klemmeinrichtung 3 verbunden werden, wobei zum Anschluß der Leiterbänder 5 und zum Anschluß der Anschlußleiter 7 konstruktiv identisch ausgebildete Klemmeinrichtungen 3 eingesetzt werden können. Beides trägt dazu bei, daß ein einfacher und sicherer Anschluß aus dem Solarzellenmodul herausgeführter dünner Leiterbänder 5 ermöglicht wird.

## Patentansprüche

1. Elektrische Anschluß- und Verbindungsdose für ein Solarzellenmodul aus mit dünnen Leiterbändern (5) angeschlossenen Solarzellen, mit einem Gehäuse und in dem Gehäuse vorgesehenen elektrischen und/oder elektronischen Einrichtungen sowie wenigstens einer in dem Gehäuse vorgesehenen und wenigstens eine Klemmeinrichtung (3) aufweisenden elektrischen Anschlußvorrichtung (1), wobei die Klemmeinrichtung (3) zur Herstellung eines Klemmkontaktes derart ausgebildet und angeordnet ist, daß wenigstens ein aus dem Solarzellenmodul herausgeführtes dünnes Leiterband (5) in zwei unterschiedlichen gegenüberliegenden Einführrchtungen in die Klemmeinrichtung (3) einführbar ist, **dadurch gekennzeichnet, dass** die Klemmeinrichtung (3) Ωförmig ausgebildet ist mit zwei über einen im Bodenbereich der Klemmeinrichtung (3) angeordneten Bodenabschnitt (10) verbundenen Klemmschenkeln (6), die in Richtung auf einen Klemmabschnitt der Klemmeinrichtung (3) aufeinander zulaufen und endseitig in auseinanderlaufende Einführschrägen übergehen, so daß die Klemmeinrichtung (3) im Klemmabschnitt einen im wesentlichen X-förmigen Querschnitt aufweist.

2. Elektrische Anschluß- und Verbindungsdose für ein Solarzellenmodul aus mit dünnen Leiterbändern (5) angeschlossenen Solarzellen, mit einem Gehäuse und in dem Gehäuse vorgesehenen elektrischen und/oder elektronischen Einrichtungen sowie wenigstens einer in dem Gehäuse vorgesehenen und wenigstens eine Klemmeinrichtung (3) aufweisenden elektrischen Anschlußvorrichtung (1), wobei die Klemmeinrichtung (3) derart ausgebildet und angeordnet ist, daß sowohl ein Klemmkontakt mit wenigstens einem Leiterband (5) als auch ein Klemmkontakt mit wenigstens einem vorzugsweise kreisförmigen Anschlußleiter (7) eines elektronischen Bauteils, insbesondere einem Anschlußleiter (7) einer Bypass-Diode (8), durch Einführen des Leiterbandes (5) bzw. des Anschlußleiters (7) in die Klemmeinrichtung (3) herstellbar ist, **dadurch gekennzeichnet, dass** die Klemmeinrichtung (3) Ω-förmig ausgebildet ist mit zwei über einen im Bodenbereich der Klemmeinrichtung (3) angeordneten Bodenabschnitt (10) verbundenen Klemmschenkeln (6), die in Richtung auf einen Klemmabschnitt der Klemmeinrichtung (3) aufeinander zulaufen und endseitig in auseinanderlaufende Einführschrägen übergehen, so dass die Klemmeinrichtung (3) im Klemmabschnitt einen im wesentlichen X-förmigen Querschnitt aufweist.

3. Anschluß- und Verbindungsdose nach einem der vorhergehenden Ansprüche, **dadurch gekennzeichnet, daß** wenigstens ein bodenseitiger Einführabschnitt (11) der Klemmeinrichtung (3) für ein Leiterband (5) vorgesehen ist und daß im Bereich des Einführabschnittes (11) die Klemmschenkel (6) unverbunden sind.

4. Anschluß- und Verbindungsdose nach einem der vorhergehenden Ansprüche, **dadurch gekennzeichnet, daß** sich der bodenseitige Einführabschnitt (11) in Längsrichtung des Klemmabschnittes (3) ausgehend von den Längsseiten der Klemmschenkel (6) in Richtung zum mittleren Bereich der Klemmeschenkel (6) erstreckt.

5. Anschluß- und Verbindungsdose nach einem der vorhergehenden Ansprüche, **dadurch gekennzeichnet, daß** der Klemmschenkel (6) im Klemmabschnitt wenigstens einen nach außen gewölbten vorzugsweise schalen förmigen weiteren Einführabschnitt (9) für den Anschlußleiter (7) aufweist und daß, weiter vorzugsweise, der weitere Einführabschnitt (9) des einen Klemmschenkels (6) und der weitere Einführabschnitt (9) des anderen Klemmschenkels (6) gegenüberliegend angeordnet sind.

6. Anschluß- und Verbindungsdose nach einem der vorhergehenden Ansprüche, **dadurch gekennzeichnet, daß** die Anschlußvorrichtung (1) einen Strombalken (2) aufweist und daß, vorzugsweise, zwei Klemmeinrichtungen (3) auf den Strombalken (2) derart aufgeklemmt sind, daß über den Strombalken (2) ein Leitungskontakt zwischen wenigstens einem in die erste Klemmeinrichtung (3) eingeführten Leiterband (5) und wenigstens einem in die zweite Klemmeinrichtung (3) eingeführten Anschlußleiter (7) herstellbar ist.

7. Anschluß- und Verbindungsdose nach einem der vorhergehenden Ansprüche, **dadurch gekennzeichnet, daß** der Strombalken (2) stegförmig mit vorzugsweise im wesentlichen rechtwinklig zueinander angeordneten Stegendabschnitten ausgebildet ist und daß, weiter vorzugsweise, an beiden Stegendabschnitten jeweils eine Klemmeinrichtung (3) vorgesehen ist.

8. Anschluß- und Verbindungsdose nach einem der vorhergehenden Ansprüche, **dadurch gekennzeichnet, daß** der Strombalken (2) im wesentlichen U-förmig ausgebildet ist und einen geraden Leiterschenkel (12) und einen abgewinkelten Leiterschenkel (13) aufweist.

9. Anschluß- und Verbindungsdose nach einem der vorhergehenden Ansprüche, **dadurch gekennzeichnet, daß** an einem freien Ende des Leiterschenkels (12, 13), vorzugsweise des abgewinkelten Leiterschenkels (13), eine Anschlußklemme (4) vorgesehen ist.

10. Anschluß- und Verbindungsdose nach einem der vorhergehenden Ansprüche, **dadurch gekennzeichnet, daß** die Klemmschenkel (6) und/oder der Bodenabschnitt (10) aus einem Federmaterial hergestellt sind.

## Claims

1. Electrical junction box for a solar cell module of solar cells which are connected by thin conductor strips (5), comprising
a housing and electrical and/or electronic means provided in the housing as well as at least one electrical connection device (1) which has at least one clamping means (3) and which is provided in the housing, wherein the clamping means (3) for producing clamping contact is configured and arranged in such a way, that at least one thin conductor strip (5) routed out of the solar cell module is insertable into the clamping module (3) in two different opposing entry directions,
**characterised in that**,
the clamping means (3) is generally Ω-shaped with two clamping legs (6) connected via a bottom section (10) which is located in a bottom area of the clamping means (3), the clamping legs running onto one another in a direction toward a clamping section of the clamping means (3) and passing into diverging entry bevels on the end side, so that the clamping means (3) has an essentially X-shaped cross section at the clamping section.

2. Electrical junction box for a solar cell module of solar cells which are connected by thin conductor strips (5), comprising
a housing and electrical and/or electronic means provided in the housing as well as at least one electrical connection device (1) which has at least one clamping means (3) and which is provided in the housing,
wherein the clamping means (3) is configured and arranged in such a way, that a clamping contact is producible with at least one conductor strip (5) as well as a clamping contact is producible with at least one preferably round supply lead (7) of an electronic component, in particular a supply lead (7) of a bypass diode (8), by inserting the conductor strip (5), respectively the lead supply (7), into the clamping means (3),
**characterised in that**
the clamping means (3) is generally Ω-shaped with two clamping legs (6) connected via a bottom section (10) which is located in a bottom area of the clamping means (3), the clamping legs running onto one another in a direction toward a clamping section of the clamping means (3) and passing into diverging entry bevels on the end side, so that the clamping means (3) has an essentially X-shaped cross section at the clamping section.

3. Electrical junction box according to one of the preceding claims, **characterised in that** at least one bottom-side entry section (11) of the clamping means (3) is provided for a conductor strip (5) and that the clamping legs (6) are unconnected in the area of the entry section (11).

4. Electrical junction box according to one of the preceding claims, **characterised in that** the bottom-side entry section (11) extends in a direction to a middle area of the clamping legs (6) in the lengthwise direction of the clamping section (3), proceeding from the lengthwise sides of the clamping legs (6).

5. Electrical junction box according to one of the preceding claims, **characterised in that** the clamping leg (6) in the clamping section comprises at least one outwardly arched, particularly shell-shaped, further entry section (9) for the lead supply (7) and that further preferably the further entry section (9) of the one clamping leg (6) and the further entry section (9) of the other clamping leg (6) are arranged opposite each other.

6. Electrical junction box according to one of the preceding claims, **characterised in that** the connection device (1) has a current bar (2), and that, preferably two clamping means (3) are clamped onto the current bar (2) such that via the current bar (5) a line contact is producible between at least one conductor strip (5) inserted into the first clamping means (3) and at least one supply lead (7) inserted into the second clamping means (3).

7. Electrical junction box according to one of the preceding claims, **characterised in that** the current bar (2) is baulk-shaped preferably with baulk end sections which are arranged essentially at right angles to one another, and that, further preferably there is a respective clamping means (3) on each of the baulk end sections.

8. Electrical junction box according to one of the preceding claims, **characterised in that** the current bar (2) is essentially U-shaped and has a straight conductor leg (12) and an angled conductor leg (13).

9. Electrical junction box according to one of the preceding claims, **characterised in that** a terminal (4) is provided on a free end of the conductor leg (12, 13), preferably on the angled conductor leg (13).

10. Electrical junction box according to one of the preceding claims, **characterised in that** the clamping legs (6) and/or the bottom section (10) are made of a spring material.

## Revendications

1. Boîte électrique de raccordement et de liaison pour un module de cellule solaire constitué de cellules solaires raccordées à des rubans de conducteurs plats (5), avec un boîtier et avec des dispositifs électriques et/ou électroniques prévus dans le boîtier ainsi qu'avec au moins un dispositif de raccordement électrique (1) prévu dans le boîtier et comportant au moins un dispositif de serrage (3), le dispositif de serrage (3) étant conçu et agencé pour l'établissement d'un contact par serrage de telle sorte qu'au moins un ruban de conducteurs plats (5) sortant du module de cellule solaire peut être introduit dans le dispositif de serrage (3) dans deux sens d'introduction différents et opposés, **caractérisée en ce que** le dispositif de serrage (3) est conçu en forme de Ω avec deux branches de serrage (6) qui sont reliées par l'intermédiaire d'un tronçon de fond (10) agencé dans la zone du fond du dispositif de serrage (3) et qui se rapprochent l'une de l'autre en direction d'un tronçon de serrage du dispositif de serrage (3) et se transforment à leur extrémité en biseaux d'introduction qui s'écartent l'un de l'autre de sorte que le dispositif de serrage (3) a, dans son tronçon de serrage, une section transversale globalement en forme de X.

2. Boîte électrique de raccordement et de liaison pour un module de cellule solaire constitué de cellules solaires raccordées à des rubans de conducteurs plats (5), avec un boîtier et avec des dispositifs électriques et/ou électroniques prévus dans le boîtier ainsi qu'avec au moins un dispositif de raccordement électrique (1) prévu dans le boîtier et comportant au moins un dispositif de serrage (3), le dispositif de serrage (3) étant conçu et agencé de manière à pouvoir établir aussi bien un contact par serrage avec au moins un ruban de conducteurs (5) qu'un contact par serrage avec au moins un conducteur de raccordement (7), de préférence rond, d'un composant électronique, notamment avec un conducteur de raccordement (7) d'une diode de dérivation (8), par introduction du ruban de conducteurs (5) ou du conducteur de raccordement (7) dans le dispositif de serrage (3), **caractérisée en ce que** le dispositif de serrage (3) est conçu en forme de Ω avec deux branches de serrage (6) qui sont reliées par l'intermédiaire d'un tronçon de fond (10) agencé dans la zone du fond du dispositif de serrage (3) et qui se rapprochent l'une de l'autre en direction d'un tronçon de serrage du dispositif de serrage (3) et se transforment à leur extrémité en biseaux d'introduction qui s'écartent l'un de l'autre de sorte que le dispositif de serrage (3) a, dans son tronçon de serrage, une section transversale globalement en forme de X.

3. Boîte électrique de raccordement et de liaison selon l'une des revendications précédentes, **caractérisée en ce qu'**il est prévu au moins un tronçon d'introduction (11), du côté du fond, du dispositif de serrage (3) pour un ruban de conducteurs (5) et **en ce que** les branches de serrage (6) ne sont pas reliées dans la zone du tronçon d'introduction (11).

4. Boîte électrique de raccordement et de liaison selon l'une des revendications précédentes, **caractérisée en ce que** le tronçon d'introduction (11) du côté du fond s'étend dans le sens de la longueur du tronçon de serrage (3) à partir des côtés longitudinaux des branches de serrage (6) et en direction de la zone médiane des branches de serrage (6).

5. Boîte électrique de raccordement et de liaison selon l'une des revendications précédentes, **caractérisée en ce que** la branche de serrage (6) comporte dans le tronçon de serrage au moins un autre tronçon d'introduction (9) qui est cintré vers l'extérieur et de préférence en forme de coque et qui est destiné au conducteur de raccordement (7) et **en ce que**, toujours de préférence, l'autre tronçon d'introduction (9) de l'une des branches de serrage (6) et l'autre tronçon d'introduction (9) de l'autre branche de serrage (6) sont agencés en face l'un de l'autre.

6. Boîte électrique de raccordement et de liaison selon l'une des revendications précédentes, **caractérisée en ce que** le dispositif de raccordement comporte une barre conductrice de courant (2) et **en ce que**, de préférence, deux dispositifs de serrage (3) sont fixés sur la barre conductrice de courant (2) de telle sorte qu'un contact conducteur peut être établi par l'intermédiaire de la barre conductrice de courant (2) entre au moins un ruban de conducteurs (5) introduit dans le premier dispositif de serrage (3) et au moins un conducteur de raccordement (7) introduit dans le deuxième dispositif de serrage (3).

7. Boîte électrique de raccordement et de liaison selon l'une des revendications précédentes, **caractérisée en ce que** la barre conductrice de courant (2) est conçue en forme de traverse avec des tronçons terminaux de traverse agencés de préférence globalement perpendiculaires l'un à l'autre et **en ce que**, toujours de préférence, un dispositif de serrage (3) est prévu sur chacun des deux tronçons terminaux de traverse.

8. Boîte électrique de raccordement et de liaison selon l'une des revendications précédentes, **caractérisée en ce que** la barre conductrice de courant (2) est conçue globalement en forme de U et comporte une branche conductrice droite (12) et une branche conductrice coudée (13).

9. Boîte électrique de raccordement et de liaison selon l'une des revendications précédentes, **caractérisée en ce qu'**une borne de raccordement (4) est prévue à une extrémité libre de la branche conductrice (12, 13), de préférence de la branche conductrice coudée (13).

10. Boîte électrique de raccordement et de liaison selon l'une des revendications précédentes, **caractérisée en ce que** les branches de serrage (6) et/ou le tronçon de fond (10) sont fabriqués en un matériau faisant ressort.
